# EUROPEAN PATENT SPECIFICATION

(11) **EP 2 555 031 B1**
(45) Date of publication and mention of the grant of the patent: **11.07.2018**
(21) Application number: 11765631.4
(22) Date of filing: 30.03.2011
(51) Int. Cl.: G02B 6/42

(54) **OPTICAL COMMUNICATION MODULE AND PRODUCTION METHOD FOR OPTICAL COMMUNICATION MODULE**
OPTISCHES KOMMUNIKATIONSMODUL UND VERFAHREN ZUR HERSTELLUNG DES OPTISCHES KOMMUNIKATIONSMODULS
MODULE DE TÉLÉCOMMUNICATION OPTIQUE, ET PROCÉDÉ DE PRODUCTION D'UN MODULE DE TÉLÉCOMMUNICATION OPTIQUE

(30) Priority: 31.03.2010 JP 2010082348
(43) Date of publication of application: 06.02.2013
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Chuo-ku Osaka-shi Osaka 541-0041 (JP)
(72) Inventor: HAYASHI, Shigeo, Yokkaichi-shi Mie 510-8503 (JP)
(74) Representative: Winter, Brandl, Fürniss, Hübner, Röss, Kaiser, Polte - Partnerschaft mbB
(86) International application number: PCT/JP2011/057999
(87) International publication number: WO 2011/125731

(56) References cited:
- WO-A1-00/08729
- JP-A- 8 082 724
- JP-A- 8 082 724
- JP-A- 62 299 091
- JP-A- 2003 234 511
- JP-A- 2003 279 809
- JP-A- 2008 122 674
- US-A- 5 050 953
- US-A- 5 526 455
- US-A1- 2004 258 110
- US-A1- 2008 305 562

## Description

### BACKGROUND OF THE INVENTION

### 1. Field of the Invention

The present invention relates to a method for manufacturing an optical communication module, which packages a photoelectric device, such as a laser diode and/or a photodiode, for performing optical communication.

### 2. Description of Related Art

Conventionally, optical communication is increasingly popular with an optical fiber or the like. The optical communication is performed with a photoelectric device, such as a laser diode, converting electrical signals into optical signals, with a optical fiber sending and receiving optical signals, and with another photoelectric device, such as a photodiode, converting received optical signals into electrical signals. Thus, it is well known to utilize one package of an optical communication module that contains a photoelectric device, such as a laser diode and/or photodiode. In some cases, the optical communication module contains a peripheral circuit element for operating the photoelectric device, too. This optical communication module is called an OSA (Optical Sub-Assembly).

For example, Patent Document 1 proposes a photoelectric conversion module that has an excellent high frequency characteristic and can be downsized, which includes a photoelectric device sending or receiving optical signals, a stem for supporting the photoelectric device, a cap for covering the photoelectric device, plural leads applying electrical signals to the photoelectric device or transmitting the electrical signals coming from the photoelectric device, a flat portion at one end of a predetermined lead located in the package configured with the stem and the cap, and an electrical circuit part which is arranged on the flat portion and whose one end is connected to the photoelectric device and the other end is connected to a lead.

The optical fiber for performing the optical communication is configured with a core passing light and a clad covering the core to confine light. Several optical fibers utilizing different materials for the core and the clad are known, such as a HPCF (hard polymer clad fiber) in which the core made of fused silica is covered by the clad made of high strength plastic and an AGF (all silica glass fiber) in which the core and the clad are made of fused silica. Users select a required optical fiber based on the communication speed and the cost. The HPCF is utilized for a relatively slow optical communication and the core diameter is about 200 µm. The AGF is utilized for a relatively fast optical communication and the core diameter is about a few µm to tens of µm. On the other hand, a size of a light emitting portion in the laser diode is about a few µm to tens of µm, and a size of a light receiving portion in the photodiode is about tens of µm. Thus, the AGF whose core diameter is smaller needs the positional adjustment with respect to the light emitting portion of the laser diode or the light receiving portion of the photodiode.

Patent Document 2, which is regarded structurally as closest prior art, discloses an optical communication module that comprises: a photoelectric device having an optical portion to receive or emit light and performing a photoelectric conversion, a part provided with a conductor connected to the photoelectric device, a lens part fixed to the part and opposed to the optical portion and a cylindrical part fixed to the lens part and having an inserted optical communication line, wherein a center of the optical portion matches with an optical axis of the lens part, or the optical center of the lens part matches with a shaft center of the cylindrial part.

For a better understanding of the present invention, it is furthermore referred to Patent Documents 3 to 6.

### Prior Art Documents

Patent Document 1: JP 2005-167189 A
Patent Document 2: JP 8 082724 A
Patent Document 3: US 5 050 953 A
Patent Document 4: US 5 526 455 A
Patent Document 5: US 2008/305562 A1
Patent Document 6: US 2004/258110 A1

### SUMMARY OF THE INVENTION

The photoelectric conversion module recited in Patent Document 1 not only includes the stem, the cap and the lead as described above, but also additional many parts, such as a heat sink for the photoelectric device and a submount plate made of ceramic. Thus, it has many problems, such as increasing required parts, high cost and complex manufacturing procedure. In addition, the positional adjustment is required for the photoelectric conversion module and the optical fiber. Thus, if the positional adjustment is performed with lower accuracy, it causes the problem that the optical communication with the photoelectric conversion module has lower accuracy.

The present invention is made in view of such a circumstance, and has an object to provide a method for manufacturing an optical communication module that can prevent worsening of communication performance caused by positional mis-adjustment of a light emitting or receiving portion of a photoelectric device, a lens, a optical fiber and the like.

According to a first aspect of the present invention, a method for manufacturing an optical communication module that comprises: a photoelectric device having an optical portion to receive or emit light in a surface connected to a conductor and performing a photoelectric conversion; a synthetic resin part provided with the conductor connected to the photoelectric device; a lens part fixed to the synthetic resin part and opposed to the optical portion; and a cylindrical part fixed to the lens part and having an inserted optical communication line, wherein the synthetic resin part is made of transparent synthetic resin, the method comprising: a first step of fixing to integrally form the synthetic resin part, the lens part, and the cylindrical part; a second step of utilizing a camera to capture the lens part formed integrally during the first step through the synthetic resin part which is transparent, after the first step; and a third step of determining a position for the photoelectric device and connecting the photoelectric device to the conductor arranged on the synthetic resin part, based on the captured image during the second step, after the second step.

According to a first aspect of the present invention, a method for manufacturing an optical communication module that comprises a photoelectric device having an optical portion to receive or emit light in a surface connected to a conductor and performing a photoelectric conversion, a synthetic resin part provided with the conductor connected to the photoelectric device, a lens part fixed to the synthetic resin part and opposed to the optical portion, and a cylindrical part fixed to the lens part and having an inserted optical communication line, wherein the synthetic resin part is made of transparent synthetic resin, the method comprising: a first step of integrally molding the synthetic resin part, the lens part, and the cylindrical part; a second step of utilizing a camera to capture the lens part formed integrally during the first step through the synthetic resin part which is transparent, after the first step; and
a third step of determining a position for the photoelectric device and connecting the photoelectric device to the conductor arranged on the synthetic resin part, based on the captured image during the second step, after the second step.

In the present invention, the number of parts required for the optical communication module is reduced, because one or more conductors are provided to the synthetic resin part to connect the photoelectric device, lens part is fixed to the synthetic resin, and the lens part is fixed to the cylindrical part into which the optical communication line is inserted, to configure the optical communication module. Furthermore, it is possible to improve accuracy of the optical communication module sending and receiving optical signals, because of the procedure (positional adjustment) for matching the center of the light receiving portion or the light emitting portion in the photoelectric device with the optical axis of the lens part, or the procedure (positional adjustment) for matching the optical axis of the lens part with the shaft center of the cylindrical part.

Additionally in the present invention, when the light receiving portion or the light emitting portion of the photoelectric device is arranged on a surface connected to the conductor, the synthetic resin part provided with the conductor is made of transparent synthetic resin. Therefore, it is possible to make the photoelectric device to send and receive optical signals through the transparent synthetic resin part.

Additionally in the present invention, it is possible to further reduce the number of parts required for the optical communication module, because the lens part is configured integrally with the cylindrical part. This configuration does not require performing the positional adjustment for the lens part and the cylindrical part. Therefore, the positional adjustment for the light receiving portion or the light emitting portion of the photoelectric device and the lens part can improve the accuracy of the optical communication module sending and receiving the optical signals.

Additionally in the present invention, it is possible to further reduce the number of parts required for the optical communication module, because the synthetic resin part is configured integrally with the lens part. Therefore, the positional adjustment for the lens part and the cylindrical part in this configuration can improve the accuracy of the optical communication module sending and receiving the optical signals.

Additionally in the present invention, it is possible to further reduce the number of parts required for the optical communication module, because the synthetic resin part, the lens part and the cylindrical part are configured integrally with each other. This configuration does not require performing the positional adjustment for the lens part and the cylindrical part. Therefore, the positional adjustment for the light receiving portion or the light emitting portion of the photoelectric device and the lens part can improve the accuracy of the optical communication module sending and receiving the optical signals.

Additionally in the present invention, the optical communication module is manufactured by the procedure for connecting the photoelectric device to the conductor arranged on the synthetic resin part, the procedure for fixing the lens part to the synthetic resin and the procedure for fixing the cylindrical part to the lens part. At that time, one part is captured by the camera and the image recognition positional adjustment is performed for determining a connection position or a fixation position based on the image obtained by the capturing, during at least one procedure among the three procedures described above. The image recognition positional adjustment has higher accuracy. Therefore, the image recognition positional adjustment performed during any of the procedures can improve the accuracy of sending and receiving optical signals performed by the optical communication module.

The present invention can reduce the cost of the optical communication module, because the photoelectric device is connected to the conductor arranged on the synthetic resin part, the lens part is fixed to the synthetic resin part, the cylindrical part is fixed to the lens part, thus the number of parts required for the optical communication module can be reduced and the manufacturing procedure can be facilitated. Furthermore, it is possible to improve the accuracy of sending and receiving optical signals performed by the optical communication module, because the positional adjustment is performed for the light receiving portion or the light emitting portion of the photoelectric device with the lens part, or for the lens part with the cylindrical part.

Moreover, it is possible to more accurately match the center of each part because of the image recognition positional adjustment performed during any of procedures for connecting the photoelectric device to the conductor arranged on the synthetic resin part, fixing the lens part to the synthetic resin part, and fixing the cylindrical part to the lens part. Therefore, it is possible further improve the accuracy of sending and receiving optical signals performed by the optical communication module.
The above and further objects and features of the invention will more fully be apparent from the following detailed description with accompanying drawings.

### BRIEF DESCRIPTION OF THE DRAWINGS

FIG. 1 is a schematic cross section view showing a first configuration of an optical communication module which as such is no part of the present invention.
FIG. 2 is a schematic plan view showing a configuration of a base part of an OSA.
FIGs. 3A and 3B are schematic views for explaining a manufacturing method of the optical communication module of FIG. 1.
FIGs. 4A and 4B are schematic views for explaining a first variation of the manufacturing method of FIGs. 3A and 3B.
FIG. 5 is a schematic cross section view showing a first variation of the optical communication module of FIG. 1.
FIG. 6 is a schematic view for explaining a manufacturing method of the optical communication module of FIG. 5.
FIG. 7 is a schematic cross section view showing a second variation of the optical communication module of FIG. 1.
FIG. 8 is a schematic cross section view showing a third variation of the optical communication module of FIG. 1.
FIG. 9 is a schematic cross section view showing a second configuration of an optical communication module which as such is no part of the present invention.
FIG. 10 is a schematic cross section view showing a variation of the optical communication module of FIG. 9.
FIG. 11 is a schematic cross section view showing a third configuration of an optical communication module which as such is no part of the present invention.
FIG. 12 is a schematic view for explaining a manufacturing method of the optical communication module of FIG. 11.
FIG. 13 is a schematic cross section view showing a variation of the optical communication module of FIG. 11.
FIG. 14 is a schematic view for explaining a manufacturing method of the optical communication module of FIG. 13.
FIG. 15 is a schematic cross section view showing an fourth configuration of the optical communication module of FIG. 1.
FIG. 16 is a schematic view for explaining a manufacturing method of the optical communication module of FIG. 15.

### DESCRIPTION OF THE PREFERRED EMBODIMENTS

### (First Configuration)

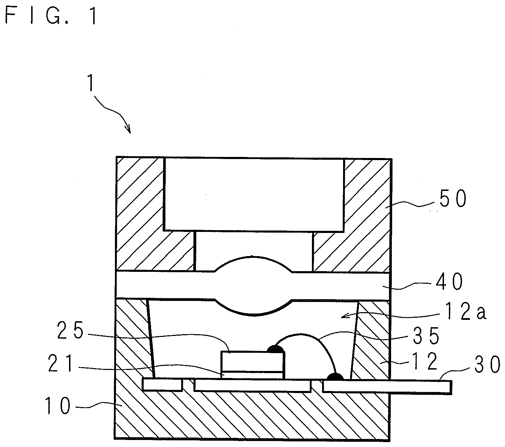

The present invention will be described in reference to figures that show various optical communication moduls and manufacturing methods thereof. It should be noted that in the present invention, only a method for manufacturing an optical communication module, not an optical communication module as such is claimed. FIG. 1 is a schematic cross section view showing a first configuration of an optical communication module according to a first configuration. The reference numeral "1" represents an OSA that packages a photodiode (photoelectric device) 25 and corresponds to the optical communication module. The OSA 1 is connected to an optical fiber (optical communication line) that is not shown in the figure. The OSA 1 is an optical communication part for making the photodiode 25 receive light emitted by another apparatus through this optical fiber, for converting optical signals into electrical signals and for outputting electrical signals.

The OSA 1 includes a base part (synthetic resin part) 10 onto which the photodiode 25 is mounted, a lens part 40, and a cylindrical part 50 into which the optical fiber is inserted. The base part 10 is substantially formed in a rectangular parallelepiped shape whose plan view is substantially square, and is made of non-transparent (or transparent) synthetic resin. The lens part 40 and the cylindrical part 50 are laminated and fixed to connect to each other, at one side (upper side in FIG. 1) of the base part 10. A recess portion 12a is arranged at an upper portion of the base part 10, and is surrounded by a peripheral wall 12. The photodiode 25 is arranged in the recess portion 12a.

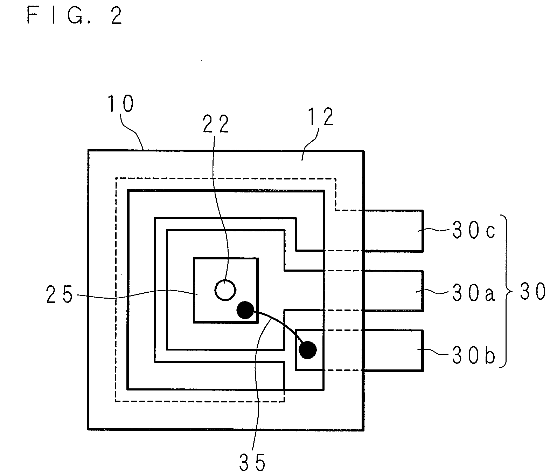

The photodiode 25 is a plate, whose plan view is substantially square, and a connection terminal 21 is arranged on the lower surface. The connection terminal 21 is for inputting and outputting electrical signals of the photodiode 25, and for connecting to a conductive plate 30 (conductor) through solder, conductive adhesive or the like. A light receiving portion 22 (shown in FIG. 2) is arranged at the substantial center on the upper surface of the photodiode 25, and detects light to convert into electrical signals. In addition, a terminal is arranged around the light receiving portion 22 to implement electrical connection through the wire 35 (i.e., wire bonding).

A metal conductive plate 30 arranged into the base part 10 of the OSA 1, and one surface of the conductive plate 30 is exposed into the recess portion 12a. A portion of the conductive plate 30 exposed into the recess portion 12a is connected to the connection terminal 21 of the photodiode 25 with solder, conductive adhesive or the like, or connected through the wire 35 to the terminal arranged on the upper surface of the photodiode 25. Thus, the conductive plate 30 is for sending and receiving electrical signals between the photodiode 25 and the external. In other words, the conductive plate 30 seems a wiring for connecting circuit parts in the receiving circuit having the photodiode 25.

FIG. 2 is a schematic plan view showing a configuration of the base part 10 of the OSA 1. In the example shown in FIG. 2, the OSA 1 includes three conductive plates 30a-30c. A first conductive plate 30a is configured with a substantially square portion arranged at the center of the base part 10 and a portion extending from the square portion to the external. The photodiode 25 is connected through solder or conductive adhesive to the connection terminal 21 at the center of the square potion of the first conductive plate 30a.

A second conductive plate 30b is substantially formed in a rectangular shape, and aligned with the first conductive plate 30a. One end portion of the second conductive plate 30b extends from the side surface of the base part 10 to the external. The second conductive plate 30b is connected through the wire 35 to the terminal arranged on the upper surface of the photodiode 25. A third conductive plate 30c is substantially formed in a U shape, and arranged to surround the first conductive plate 30a. One end portion of the third conductive plate 30c extends from the side surface of the base part 10 to the external. The third conductive plate 30c is utilized for shielding the OSA 1, for example, with the connection to the ground electric potential. The portions of conductive plates 30a-30c extending from the base part 10 are utilized as terminals for connecting the OSA 1, for example, with a circuit board of a communication apparatus.

For example, the base part 10 of the OSA 1 can be manufactured by a method, so called injection molding, in which the conductive plate 30 (30a-30c) previously formed in a predetermined shape is kept in a mold and then liquid synthetic resin is poured into the mold to be cured. For the OSA 1 shown in figures, it is possible to select the synthetic resin utilized for making the base part 10, regardless of the heat resistance of the photodiode 25 and the like. Therefore, it is possible to select the synthetic resin whose forming accuracy is higher and which highly prevents the deformation due to the environmental condition, such as temperature change.

In addition, the lens part 40 of the OSA 1 is formed in a plate shape whose plan view is substantially square same as the base part 10, and convex lens surfaces are configured at the centers on the upper and lower surfaces of the lens part 40. The lens part 40 is made of transparent synthetic resin. The lens part 40 is connected and fixed to the upper surface of the peripheral wall 12 of the base part 10, with adhesive or the like. In this arrangement, the light receiving portion 22 of the photodiode 25 mounted on the base part 10 is opposed to the lens surface at the lower surface side of the lens part 40.

The cylindrical part 50 of the OSA 1 is substantially formed in a cylindrical shape, and made of non-transparent (or transparent) synthetic resin. A though hole is configured at the shaft center of the cylindrical part 50 and the plan view of the through hole is substantially circular. The diameter of the through hole is stepwisely changed, and thus, the inner diameter at the one end side (upper side in FIG. 1) is larger and the inner diameter at the other end side (lower side) is smaller. The upper side portion of the through hole of the cylindrical part 50 has the diameter substantially equal to the diameter of the optical fiber not shown in figures, and thus the optical fiber can be inserted and fit into the upper side portion of the cylindrical part 50. The cylindrical part 50 is configured to match the center of cylindrical part 50 with the center of the optical fiber after the optical fiber is fit into the cylindrical part 50.

The lower side surface of the cylindrical part 50 is connected and fixed with adhesive or the like to the upper surface of the lens part 40. The diameter of the through hole of the cylindrical part 50 is set to be larger than the diameter of the lens surface at the upper surface side of the lens part 40, in order to keep the lens surface of the upper surface side of the lens part 40 within the lower side portion of the through hole.

When the lens part is connected and fixed to the upper side of the base part 10 and the optical fiber fits to the cylindrical part 50, light emitted from the end surface of the optical fiber is collected by the lens surfaces of the lens part 40 to the light receiving portion 22 of the photodiode 25 connected to the conductive plate 30 of the base part 10.

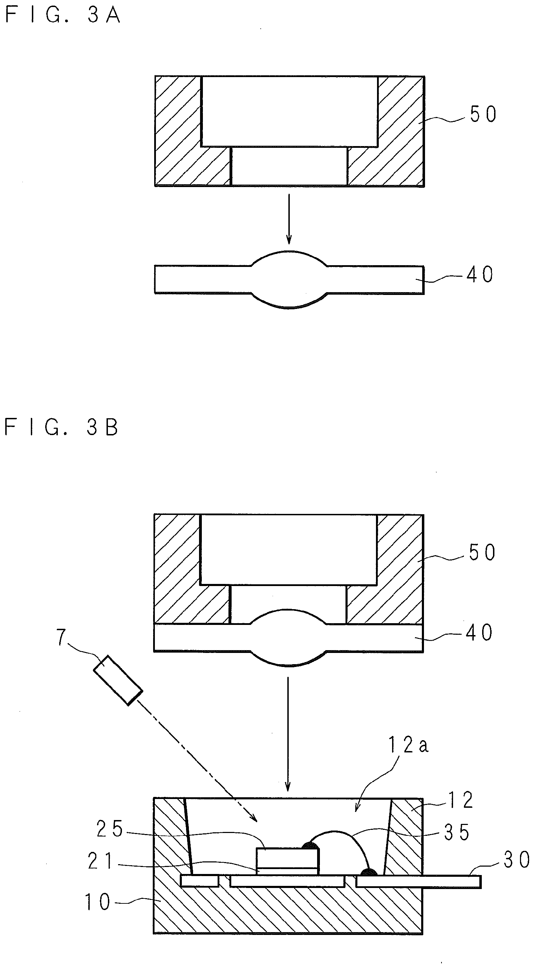

FIGs. 3A and 3B are schematic views for explaining a manufacturing method of the optical communication module (OSA 1) of FIG. 1 according to the first configuration. The manufacturing method of the OSA 1 is time-sequentially illustrated from FIG. 3A to FIG. 3B. In the manufacturing method of the OSA 1 according to the first configuration, the conductive plate 30 is formed in a predetermined shape, for example, by working a metal plate. Then, the conductive plate 30 is kept in a mold for the injection molding, and liquid synthetic resin is poured and cured into the mold, in order to make the base part 10. In addition, the photodiode 25 is connected to the portion of the conductive plate 30 exposed into the recess portion 12a of the base part 10. Similarly, the transparent lens part 40 and the non-transparent cylindrical part 50 are independently made by the injection molding. It should be noted that the manufacturing methods of them are omitted in FIG. 3A and FIG. 3B.

Then, the lens part 40 and the cylindrical part 50 are connected and fixed to each other, for example by applying adhesive for adhering the upper surface of the lens part 40 and the end surface at the lower side of the cylindrical part 50 (see FIG. 3A). At that time, the positional adjustment of the lens part 40 and the cylindrical part 50 can be based on the shape of each part or the like. For example, any of side surfaces may be aligned for the positional adjustment

Then, a camera 7 is utilized for capturing an image from above the base part 10, and the captured image is utilized for determining the center position of the light receiving portion 22 of the photodiode 25. The position of the lens part 40 connected to the cylindrical part 50 is determined with respect to the base part 10, to match the center of the lens surface of the lens part 40 (optical axis) with the center position determined in accordance with the captured image (image recognition positional adjustment), and then lens part 40 is connected and fixed, for example with adhesive, to the upper end surface of the base part 10 in conformity with the determined position (FIG. 3B). Thus, the manufacturing of the OSA 1 is completed. It should be noted that gas or the like may be injected into the recess portion 12a of the base part 10 before the lens part 40 is connected and fixed to the base part 10.

The OSA 1 according to the first configuration described above the OSA 1 has a reduced number of parts and, therefore, can simplify the manufacturing method, because the basement 10 with the photodiode 25, the lens part 40 and the cylindrical part 50 are connected and fixed. Therefore, it is possible to implement the price reduction of the OSA 1. Furthermore, the positional adjustment can be accurately performed, because the image recognition positional adjustment is utilized to perform the positional adjustment for the center of the light receiving portion 22 of the photodiode 25 mounted on the base part 10 and the optical axis of the lens part 40. Therefore, it is possible to improve the accuracy of OSA 1 receiving optical signals.

The OSA 1 is explained in the first configuration to include the photodiode 25 as the photoelectric device for receiving light. However, the OAS 1 may include a light emitter as the photoelectric device, such as a laser diode, for emitting light. In addition, the OSA 1 is explained to include one photoelectric device in the recess portion 12a. However, the OSA 1 may include plural photoelectric devices. In the latter case, the OSA including both photoelectric devices, i.e., a photodiode and a laser diode, can emit and receive light. Therefore, it is possible to implement the transmission of optical signals.

The configuration of the conductive plate 30 (30a-30c) shown in FIG. 2 is just an example. In addition, although it is explained to connect the terminal of the upper surface of the photodiode 25 to the conductive plate 30 with the wire 35, in the case that plural connection terminals 21 are provided on the lower surface of the photodiode 25, the connection with the wire 35 may not be utilized.

### (First Variation of the Manufacturing Method of FIGs. 3A-3B)

It is explained about the manufacturing method of the OSA 1 to utilize the image recognition positional adjustment for performing the positional adjustment of the center of the light receiving portion 22 of the photodiode 25 mounted on the base part 10 and the center of lens part 40. However, there are alternatives to this method.

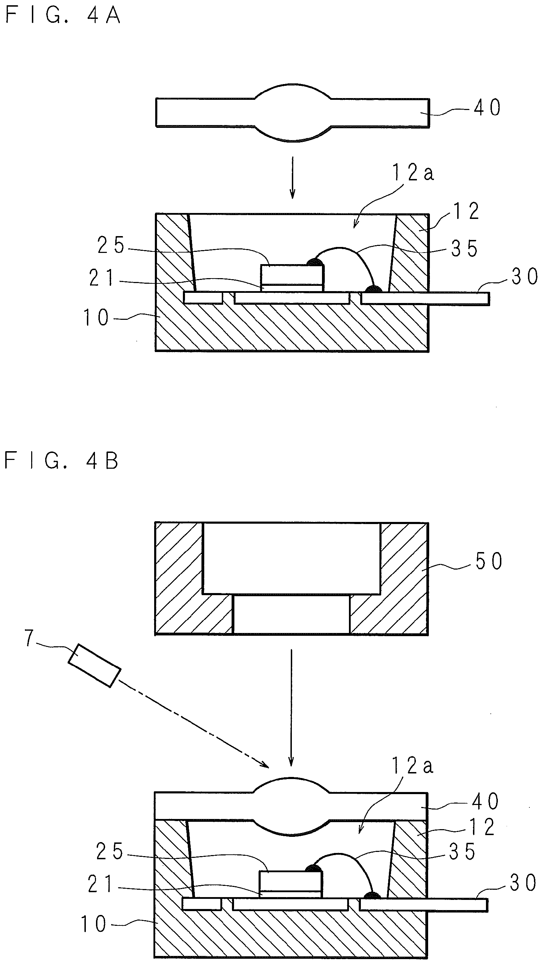

FIGs. 4A and 4B are schematic views for explaining an alternative manufacturing method of the optical communication module (OSA 1) of FIG. 1. The manufacturing method of the OSA 1 is time-sequentially illustrated from FIG. 4A to FIG. 4B. In this manufacturing method of the OSA 1, the lens part 40 is firstly connected and fixed, for example with adhesive, to the upper end surface of the base part 10 in which the photodiode 25 is mounted (see FIG. 4A). At that time, the positional adjustment of the base part 10 and the lens part 40 can be based on the shape of each part, for example, by aligning any of side surfaces. It should be noted that gas or the like may be injected into the recess portion 12a of the base part 10 before the lens part 40 is connected and fixed to the base part 10.

Then, the camera 7 is utilized for capturing an image from above the lens part 40, and the captured image is utilized for determining the center potion of the lens surface of the lens part 40. The position of the cylindrical part 50 is determined with respect to the lens part 40 connected and fixed to the base part 10, to match the determined center position based on the captured image with the shaft center of the cylindrical part, and then, the cylindrical part 50 is connected and fixed to the upper surface of the lens part 40, for example with adhesive, to make the position of the cylindrical part become the determined position (see FIG. 4B). Then, the first variation of the manufacturing method of the OSA 1 is completed.

The manufacturing method according to the variation 1 of the OSA 1 can accurately perform the positional adjustment and improve the accuracy of receiving optical signals, because the image recognition positional adjustment is performed in accordance with the image captured by the camera 7 from the upper side of the lens part 40, for the positional adjustment of the center of lens part 40 and the center of the cylindrical part 50.

### (First Variation of the Module of FIG. 1)

Although the OSA 1 according to the above first configuration is explained to include the photodiode 25 whose light receiving portion 22 and the connection terminal 21 are respectively arranged at the opposing sides, alternative OSA 1 is possible.

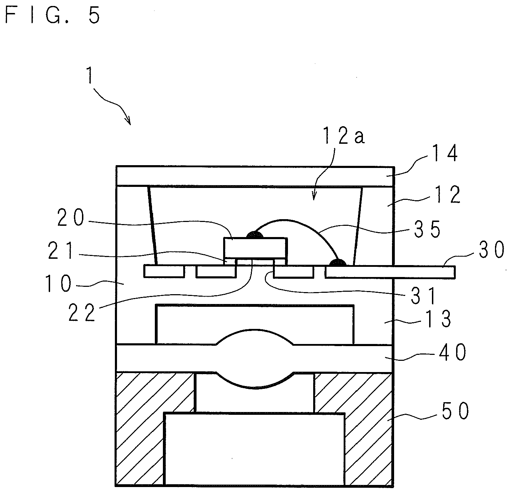

FIG. 5 is a schematic cross section view showing a first variation of the optical communication module of FIG. 1. The OSA 1 according to the first variation includes the photodiode 20 whose connection terminal 21 for connecting to the conductive plate 30 buried in the base part 10 and the light receiving portion 22 are arranged on the same surface (lower surface in FIG. 5).

The photodiode 20 is a plate whose plan view is substantially square, and includes the light receiving portion 22 arranged at the center on the lower surface of the photodiode 20 for detecting light and converting into electrical signals and the annular connection terminal 21 surrounding the light receiving portion 22. In addition, the terminal is arranged on the upper surface of the photodiode 20 for implementing the electrical connection through the wire 35.

The conductive plate 30 buried in the base part of the OSA 1 according to the variation 2 is provided with an opening 31 for passing light to the light receiving portion 22 of the connected photodiode 20. In addition, the base part 10 is made of transparent synthetic resin. Therefore, the photodiode 20 connected to the conductive plate 30 buried in the base part 10 can receive external light at the light receiving portion 22, through the transparent base part 10 and the opening 31 of the conductive plate 30.

The OSA 1 according to the first variation includes a cover 14 that seals the recess potion 12a of the base part 10. The cover 14 is a plate whose plan view is substantially square, and is connected and fixed to the upper end surface of the peripheral wall 12 of the base part 10 with adhesive or the like. The cover 14 is made of transparent or non-transparent synthetic resin.

The square cylindrical peripheral wall 13 is arranged on the lower surface of the base part 10 for surrounding. The lens part 40 of the OSA 1 according to the variation 2 is connected and fixed to the lower end surface of the peripheral wall 13 of the base part 10 with adhesive or the like. Thus, the light receiving portion 22 of the photodiode 20 mounted on the base part 10 is arranged opposite through the opening 31 of the conductive plate 30 and the transparent base part 10 to the lens surface of the upper surface side of the lens part 40. The cylindrical part 50 of the OSA 1 according to the first variation is connected and fixed to the lower surface of the lens part 40 with adhesive or the like, as the side having a smaller diameter is kept as the upper side.

The lens part 40 is connected and fixed to the lower side of the base part 10 onto which the photodiode 20 is mounted, the cylindrical part 50 is connected and fixed to the lower surface of the lens part 40, and the optical fiber is further fit into the cylindrical part 50. Thus, the light emitted from the end surface of the optical fiber is collected by the lens part 40 toward the photodiode 20 mounted on the base part 10, and the light emitted from the lens part 40 is received by the light receiving portion 22 of the photodiode 20 through the transparent base part 10 and the opening 31 of the conductive plate 30.

Similarly to the manufacturing method shown in FIG. 3A and FIG. 3B of the OSA 1 according to the first configuration, the manufacturing method of the OSA 1 according to the first variation thereof firstly connects and fixes lens part 40 and the cylindrical part 50, captures the image of the base part 10 with the camera 7, determines the center position of the light receiving portion 22 of the photodiode 20 through the transparent base part 10 and the opening 31 of the conductive plate 30, determines the position of the lens part 40 with respect to the base part 10 to match the determined center position with the center of the lens part 40, and then connects and fixes the lane part 40 to the lower end surface of the base part 10 with adhesive or the like.

Similarly to the manufacturing method shown in FIG. 4A and FIG. 4B of the OSA 1, the manufacturing method of the OSA 1 may alternatively connect and fix the lens part 40 at first to the base part 10 on which the photodiode 20 is mounted, capture the image of the lens part 40 with the camera 7 to determine the center position of the lens part 40, determine the position of the cylindrical part 50 with respect to the lens part 40 to match the center position with the center of the lens part 40, and then, connect and fix the cylindrical part 50 to the lower surface of the lens part 40 with adhesive or the like.

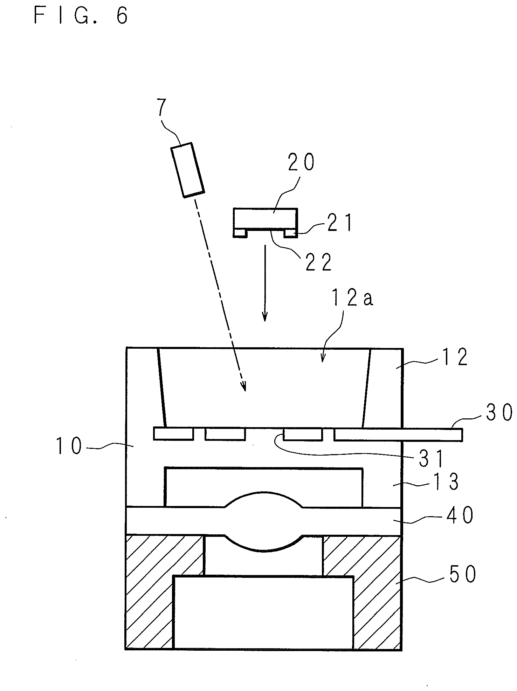

Another method can be utilized for manufacturing the OSA 1. FIG. 6 is a schematic view for explaining a manufacturing method of the optical communication module of FIG. 5. In this manufacturing method, the base part 10, the lens part 40 and the cylindrical part 50 are firstly connected and fixed with adhesive or the like (this process is not shown in figures). At that time, the positional adjustment for each part can be based on the shape of each part. For example, this positional adjustment can be performed by the alignment of any side surfaces.

Then, the camera 7 is utilized to capture an image from above the base part 10, and the center position of the lens surface of the lens part 40 is determined through the opening 31 of the conductive plate 30 and the transparent base part 10. The position of the photodiode 20 is determined with respect to the base part 10, to match the center position of the lens surface determined from the captured image with the center of the light receiving portion 22 of the photodiode 20. The photodiode 20 is connected and fixed with solder or the like to the exposed portion of the conductive plate 30 buried into the base part 10, to match the position of the photodiode 20 with the determined position. After the photodiode 20 is connected and fixed, the cover 14 is connected and fixed with adhesive or the like to the upper end surface of the base part 10. Then, this method is completed.

The OSA 1 according to the first variation described above can be configured with the connected and fixed base part 10, lens part 40 and cylindrical part 50, similarly to the OSA 1 according to the first configuration shown in FIG. 1, FIG. 3A and FIG. 3B, because the base part 10 is made of transparent synthetic resin and the opening 31 is configured in the conductive plate 30 although the connection terminal 21 for connecting to the conductive plate 30 and the light receiving portion 22 are arranged on the same surface of the photodiode 20.

Although the OSA 1 according to the first variation is explained to provide the opening 31 to the conductive plate 30 for passing light to the photodiode 20, alternatively, a notch, a slit or the like may be provided to the conductive plate 30. It may be alternatively configured that the photodiode 20 receives light through a gap of plural conductive plates 30 when the photodiode 20 is connected over plural conductive plates 30.

### (Second Variation of the Module of FIG. 1)

Although the OSA 1 according to the first variation of the first configuration described above is explained to utilize transparent synthetic resin for making the base part 10, an alternative structure is conceivable.

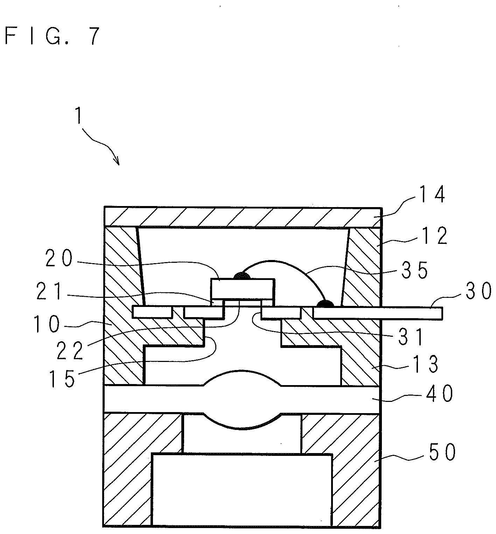

FIG. 7 is a schematic cross section view showing a second variation of the optical communication module shown in FIG. 1. This OSA 1 is similarly configured to the OSA 1 shown in FIG. 5, however, includes the base part 10 made of non-transparent synthetic resin, differently from the OSA 1 according to the variation 2.

The base part 10 of the OSA 1 according to this variation is provided with a through hole 15 that penetrates vertically to continue to the opening 31 of the conductive plate 30. Thus, the photodiode 20 connected to the conductive plate 30 can receive light through the through hole 15 of the base part 10 and the opening 31 of the conductive plate 30. Hence, when the lens part 40 is connected and fixed to the lower side of the base part 10 mounting the photodiode 20, the cylindrical part 50 is fixed and connected to the lower surface of the lens part 40 and the optical fiber is further fit into the cylindrical part 50, the light emitted from the end surface of the optical fiber is collected by the lens part 40 toward the photodiode 20 mounted on the base part 10 and the light emitted from the lens part 40 is received by the light receiving portion 22 of the photodiode 20 through the through hole 15 of the base part 10 and the opening 31 of the conductive plate 30.

The method for manufacturing the OSA 1 according to this variation can be similar to the method for manufacturing the OSA 1 according to the first variation described above.

### (Third Variation of the Module of FIG. 1)

Although the OSA 1 according to the first configuration shown in FIG. 1 is explained to connect the photodiode 25 to the conductive plate 30 exposed in the recess portion 12a of the base part 10, an alternative OSA 1 is conceivable.

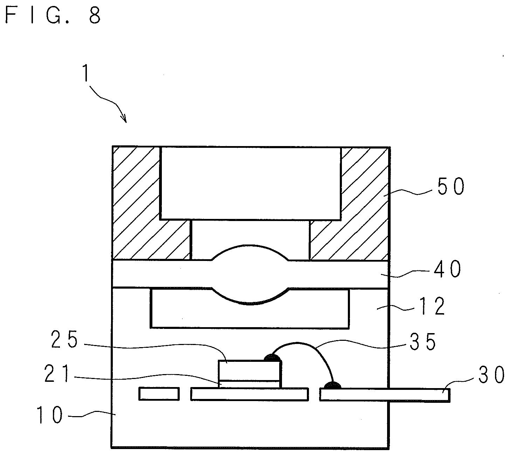

FIG. 8 is a schematic cross section view showing a third variation of the optical communication module of FIG. 1. The base part 10 of the OSA 1 according to this variation is a resin molding part formed in a predetermined shape, and implements plastic sealing with the transparent synthetic resin on the conductive plate 30 and the photodiode 25 connected to the conductive plate 30.

The base part 10 of the OSA 1 according to this variation is substantially formed in a rectangular parallelepiped whose plan view is substantially square. The square cylindrical peripheral wall 12 is arranged on the upper surface of the base part 10. The base part 10 is made of transparent synthetic resin, and contains the conductive plate 30, the photodiode 25 connected to the conductive plate 30, the wire 35 connecting the terminal on the upper surface of the photodiode 25 to the conductive plate 30, and the like. The photodiode 25 can receive light at the light receiving portion 22 through the transparent base part 10.

The lens part 40 of the OSA 1 is connected and fixed with the adhesive or the like to the upper end surface of the peripheral wall 12 of the base part 10. The cylindrical part 50 of the OSA 1 is connected and fixed with adhesive to the upper surface of the lens part 40. The method for manufacturing the OSA 1 according to the variation 4 is similar to the method for manufacturing the OSA 1 according the OSA 1 of the embodiment 1 shown in FIG. 3A and FIG. 3B. and to the method for manufacturing the OSA 1 according to the OAS 1 according to the variation 2 shown in FIG. 4A and FIG. 4B.

### (Second Configuration)

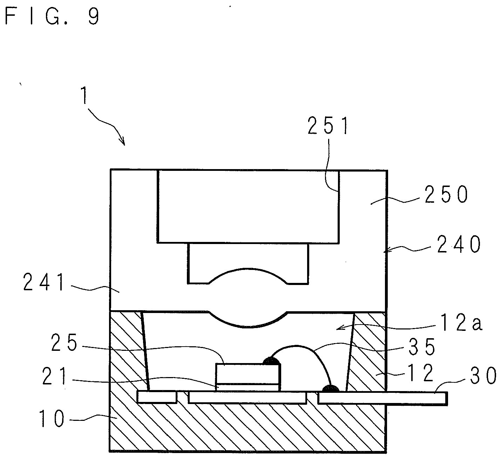

FIG. 9 is a schematic cross section view showing a second configuration of an optical communication module The OSA 1 according to the second configuration corresponds to a configuration in which the lens part 40 and cylindrical part 50 of the OSA 1 shown in FIG. 1 are integrally made of transparent synthetic resin.

The OSA 1 according to the second configuration includes the photodiode 25, the base part 10 mounting the photodiode 25, and the lens part 240 having the cylindrical portion 250 into which the optical fiber is fit. The photodiode 25, the base part 10 and the like are similarly configured to those in the OSA 1 according to the first configuration shown in FIG. 1.

The lens part 240 of the OSA 1 according to the second configuration includes a cylindrical portion 250, formed in a circle cylinder shape, which is connected to one surface (upper surface in FIG. 9) of a plate portion 241 whose plan view is substantially square similarly to the base part 10. Thus, the lens part 240 of the OSA 1 according to the second configuration is integrally made of transparent synthetic resin. The cylindrical portion 250 of the lens part 240 includes a fitting hole 251, substantially formed in a circular shape, for fitting the optical fiber. The fitting hole 251 is closed at the lower side and the diameter is stepwisely shorter toward the lower side. The lens part 240 is provided with convex lens surfaces at the center of the lower surface and at the lower portion of the fitting hole 251. The centers of two lens surfaces match to each other.

The lower surface of the lens part 240 is connected and fixed with adhesive or the like to the upper end surface of the peripheral wall 12 of the base part 10. When the optical fiber is fit to the cylindrical portion 250 of the lens part 240, the light emitted from the end surface of the optical fiber is collected by the lens surface of the lens part 240 toward the light receiving portion 22 of the photodiode 25 connected to the exposed portion of the conductive plate 30 buried in the base part 10.

The method for manufacturing the OSA 1 according to the second configuration can be similar to the method for manufacturing the OSA 1 according to the first configuration shown in FIG. 3B. Particularly, the camera 7 is utilized to capture an image from above the base part 10, and the captured image is utilized for determining the center position of the light receiving portion 22 of the photodiode 25. The position of the lens part 240 is determined with respect to the base part 10, to match the center position determined from the captured image with the center of the lens surface of the lens part 240. Then, the lens part 240 is connected and fixed with adhesive or the like to the upper end surface of the base part 10, to match with the determined position. Thus, the OSA 1 according to the second configuration can be manufactured.

The OSA 1 according to the second configuration described above can further reduce the number of parts required for the OSA 1 and further simplify the manufacturing method, because the lens part 40 and cylindrical part 50 of the OSA 1 according to the first configuration are integrally configured to each other in the lens part 240. It is possible to further improve the accuracy of the OSA 1 receiving optical signals, because the integral configuration can contribute to accurately match the lens surface of the lens part 240 and the center of the cylindrical portion 250.

### (Variation of the Second Configuration)

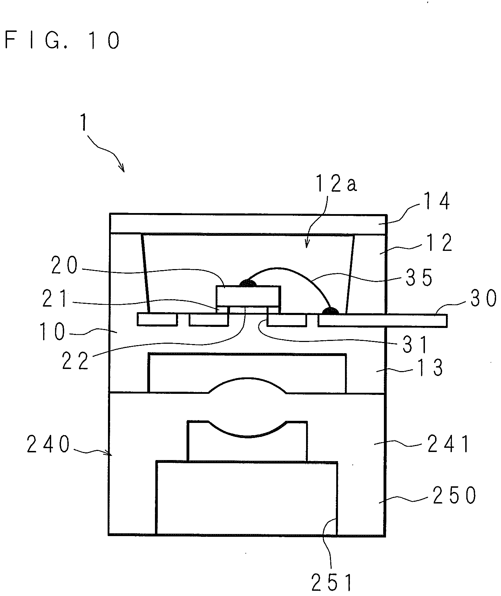

FIG. 10 is a schematic cross section view showing a varation of the optical communication module (OSA 1) of FIG. 9. This OSA 1 corresponds to a configuration in which the lens part 40 and cylindrical part 50 of the OSA 1 according to the first variation shown in FIG. 5 of the first configuration shown in FIG. 1 are integrally made of transparent synthetic resin.

This OSA 1 includes the photodiode 20, the base part 10 mounting the photodiode 20, and the lens part 240 having the cylindrical portion 250 for fitting the optical fiber. The photodiode 20, the base part 10 and the like are similarly configured to those of the OSA 1 according to the first variation shown in FIG. 5 of the first configuration shown in FIG. 1. In addition, the lens part 240 is configured similarly to the OSA 1 shown in FIG. 9.

Even when the OSA 1 includes the photodiode 20 in which the connection terminal 21 for connecting the conductive plate 30 and the light receiving portion 22 are arranged on the lower surface, it is possible to obtain the effect same as the OSA 1 according to the embodiment 2 shown in FIG. 9 because the transparent base part 10 buried in the conductive plate 30 having the opening 31 for passing light to the light receiving portion 22 and the cylindrical portion 250 are integrally formed. In other words, the OSA 1 according to the variation includes the lens part 240 in which the lens part 40 and cylindrical part 50 of the OSA 1 according to the first configuration are integrally formed, and thus, it is possible to further reduce the number of parts required for the OSA 1 and to further simplify the manufacturing method. Furthermore, the integral formation can contribute to accurately match the lens surface of the lens part 240 and the center of the cylindrical portion 251, and thus it is possible to further improve the accuracy of the OSA 1 receiving the optical signals.

The method for manufacturing the OSA 1 according to this variation can be similar to the method according to the first variation for manufacturing the OSA 1 according to the first configuration. Thus, it is possible to utilize the camera 7 for capturing an image of the base part 10, to determine the center position of the light receiving portion 22 of the photodiode 20 through the transparent base part 10 and the opening 31 of the conductive plate 30, to determine the position of the lens part 240 with respect to the base part 10 for matching the center portion with the center of the lens part 240, and connect and fix the lens part 240 with adhesive or the like to the lower end surface of the base part 10. Alternatively, it is possible to connect and fix the base part 10 and the lens part 240 with adhesive or the like, to utilize the camera 7 for capturing the image from above the base part 10, determine the center position of the lens surface of the lens part 240 through the opening 31 of the conductive plate 30 and the transparent base part 10, to determine the position of the photodiode 20 with respect to the base part 10 for matching the center position of the lens surface determined from the captured image with the center of the light receiving portion 22 of the photodiode 20, and to connect and fix the photodiode 20 with solder or the like to the exposed portion of the conductive plate 30 buried in the base part 10 for arranging the photodiode 20 at the determined position (see FIG. 6).

### (Third Configuration)

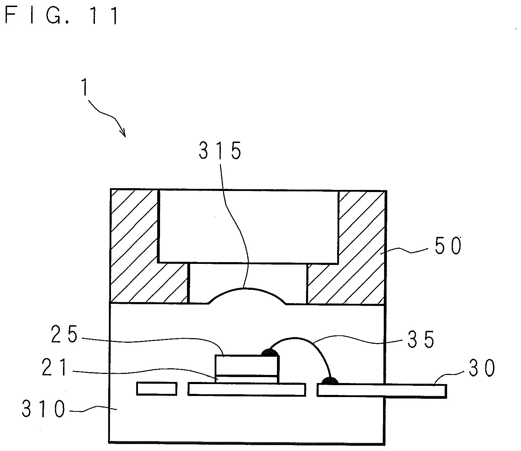

FIG. 11 is a schematic cross section view showing a configuration of an optical communication module according to a third configuration. This OSA 1 corresponds to a configuration in which the base part 10 and lens part 40 of the OSA 1 according to the first configuration shown in FIG. 1 are integrally made of transparent synthetic resin.

This OSA 1 includes the photodiode 25, the transparent base part 310 in which the photodiode 25 and the conductive plate 30 connected to the photodiode 25 are sealed with resin, and the cylindrical part 50 for fitting the optical fiber. The configurations of the photodiode 25, conductive plate 30 and cylindrical part 50 are similar to those of the OSA 1 according to the first configuration shown in FIG. 1.

The base part 310 of the OSA 1 according to the third configuration is substantially formed in a rectangular parallelepiped shape whose plan view is substantially square, and is made of transparent synthetic resin. The base part 310 contains the conductive plate 30, the photodiode 25 connected to the conductive plate 30, the wire 35 connecting the terminal on the upper surface of the photodiode 25 to the conductive plate 30, and the like. A convex lens surface 315 is integrally formed at the center on one surface (upper surface in FIG. 11) of the base part 310. The lens surface 315 is arranged to the base part 310 to match the center with the center of light receiving portion 22 of the photodiode 25 buried into the base part 310.

The cylindrical part 50 is connected and fixed with adhesive to the upper surface of the base part 310, to fit the optical fiber into the upper side portion having larger diameter of the through hole and to contain the lens surface 315 at the lower side portion having smaller diameter of the through hole. When the cylindrical part 50 is connected and fixed to the upper side of the base part 310 and the optical fiber is fit into the cylindrical part 50, the light emitted from the end surface of the optical fiber is collected by the lens surface 315 of the base part 310 toward the light receiving portion 22 of the photodiode 25 buried in the base part 310.

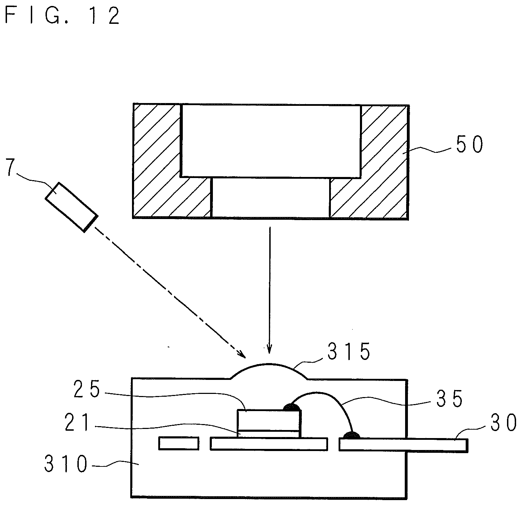

FIG. 12 is a schematic view for explaining a manufacturing method of the optical communication module shown in FIG. 11. In this method, the conductive plate 30 is formed in a predetermined shape, for example, from working a metal plate, the photodiode 25 is connected to the conductive plate 30 through solder, the wire 35 and the like, the photodiode 25, conductive plate 30 and the like are kept in a mold for the injection molding, and transparent synthetic resin is poured into the mold to cure, for making the base part 310 having the lens surface 315 (these processes are not shown in figures).

Then, the camera 7 is utilized to capture an image from above the base part 310, and the captured image is utilized to determine the center position of the light receiving portion 22 of the photodiode 25 or the center position of the lens surface 315. The position of the cylindrical part 50 is determined with respect to the base part 310, to match the center position determined from the capture image with the center of the cylindrical part 50. The cylindrical part 50 is connected and fixed with adhesive or the like to the upper end surface of the base part 310. Then, this method is completed.

The OSA 1 according to the third configuration described above can further reduce the number of parts required for the OSA 1 and further simplify the manufacturing method, because the base part 10 and lens part 40 of the OSA 1 according to the embodiment 1 are integrally formed in the base part 310. Moreover, it is possible to further improve the accuracy of the OSA 1 receiving optical signals, because the integral formation can contribute to accurately match the center of the light receiving portion 22 of the photodiode 25 in the base part 310 with the center of the lens surface 315.

### (Variation of the Third Configuration)

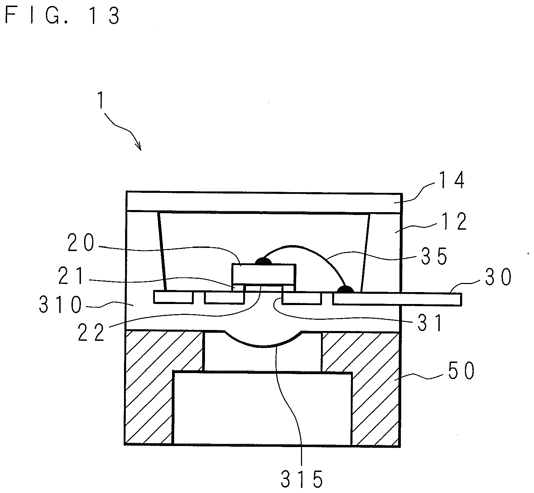

FIG. 13 is a schematic cross section view showing a variation of the optical communication module of FIG. 11. This OSA 1 corresponds to a configuration in which the base part 10 and lens part 40 of the OSA 1 according to the first variation of the first configuration are integrally made of transparent synthetic resin.

This OSA 1 includes the photodiode 20 in which the connection terminal 21 for connecting to the conductive plate 30 and the light receiving portion 22 are arranged on the same surface. The conductive plate 30 buried in the base part 310 of the OSA 1 is provided with the opening 31 for passing light to the light receiving portion 22 of the connected photodiode 20. The base part 310 is made of transparent synthetic resin, and the convex lens surface 315 is integrally formed at the center on one surface (lower surface in FIG. 13) of the base part 310. The lens surface 315 is provided to the base part 310, to match the center of the lens surface 315 with the center of the opening 31 of the conductive plate 30 buried in the base part 310, and with the center of the light receiving portion 22 of the photodiode 20 connected to the conductive plate 30.

The cylindrical part 50 is connected and fixed with adhesive or the like to the lower surface of the base part 310 to surround the lens surface 315. When the cylindrical part 50 is connected and fixed to the lower surface of the base part 310 and the optical fiber is fit into the cylindrical part 50, the light emitted from the end surface of the optical fiber is collected by the lens surface 315 of the base part 310 toward the light receiving portion 22 of the photodiode 25 connected to the conductive plate 30 buried in the base part 10.

Similarly to the method for manufacturing the OSA 1 according to the third configuration shown in FIG. 11, the method for manufacturing this OSA 1 can utilize the camera 7 to capture the image of the base part 310, determine the center position of the light receiving portion 22 of the photodiode 20 or the center position of the lens surface 315, determine the position of the cylindrical part 50 with respect to the base part 310 to match the center position with the center of the cylindrical part 50, and connect and fixe the cylindrical part 50 to the lower surface of the base part 310.

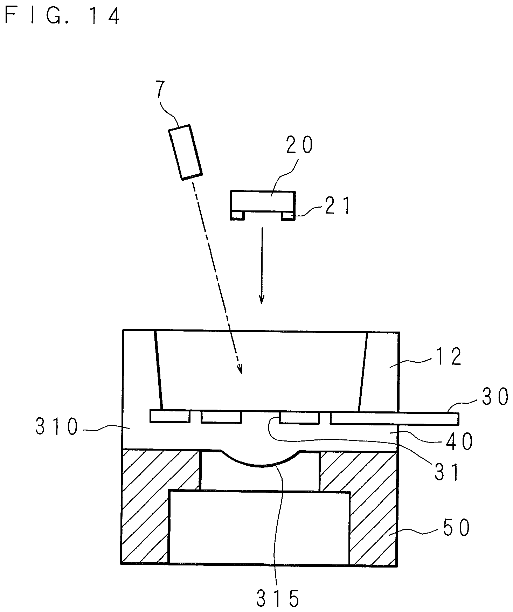

FIG. 14 is a schematic view for explaining a manufacturing method of the optical communication module according to the variation of the third configuration. In the method for manufacturing this OSA 1, the base part 310 and the cylindrical part 50 are firstly connected and fixed with adhesive or the like. At that time, the positional adjustment of each part can be based on the shape of each part or the like, for example, performed by the alignment of any side surfaces.

Then, the camera 7 is utilized to capture an image from above the base part 310, and the center position of the lens surface 315 is determined through the opening 31 of the conductive plate 30 and the transparent base part 310. The position of the photodiode 20 is determined with respect to the base part 310, to match the center position of the lens surface 315 determined from the captured image with the center of the light receiving portion 22 of the photodiode 20. The photodiode 20 is connected and fixed with solder or the like to the exposed portion of the conductive plate 30 buried in the base part 310, to arrange the photodiode 20 at the determined position. After the photodiode 20 is connected and fixed, the cover 14 is connected and fixed to with adhesive or the like to the upper end surface of the base part 310. Thus, this method for manufacturing the OSA 1 is completed.

The OSA 1 according to the variation of the third configuration described above can further reduce the number of parts required for the OSA 1 and further simplify the manufacturing method, similarly to the OSA 1 according to the third configuration and the manufacturing method thereof shown in FIG. 11 and FIG. 12, respectively, because the opening 31 is provided to the conductive plate 30, the base part 310 is made of transparent synthetic resin and the lens surface 315 is integrally formed with the base part 310 although the connection terminal 21 for connecting to the conductive plate 30 and the light receiving plate 30 are arranged on the same surface of the photodiode 20. Moreover, it is possible to further improve the accuracy of the OSA 1 receiving optical signals, because the integral formation can accurately match the center of the light receiving portion 22 of the photodiode 25 with the center of the lens surface 315 in the base part 310.

### (Embodiment 4 Fourth Configuration)

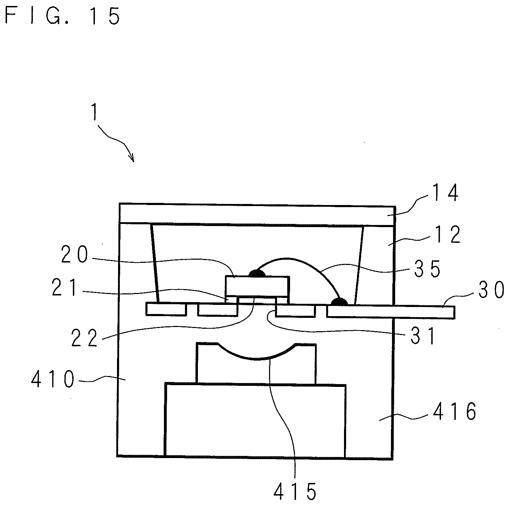

FIG. 15 is a schematic cross section view showing a fourth configuration of an optical communication module. The OSA 1 according to the fourth configuration corresponds to a configuration in which the base part 10, lens part 40 and cylindrical part 50 of the OSA 1 according to the first variation shown in FIG. 5 of the first configuration shown in FIG. 1 are integrally made of transparent synthetic resin.

The OSA 1 according to the fourth configuration includes the photodiode 20 in which the connection terminal 21 for connecting to the conductive plate 30 and the light receiving portion 22 are arranged on the same surface. The conductive plate 30 buried in the base part 410 of the OSA 1 according to the fourth configuration is provided with the opening 31 for passing light to the light receiving portion 22 of the connected photodiode 20.

The base part 410 of the OSA 1 according to the fourth configuration is made of transparent synthetic resin. The convex lens surface 415 is integrally formed at the center on one surface (lower surface in FIG. 15) of the base part 410, and the cylindrical portion 416 is integrally formed to surround the lens surface 415 on the same surface. The base part 410 is configured to match the center of lens surface 415 with the center of the cylindrical portion 416. The photodiode 20 is connected to the exposed portion of the conductive plate 30 buried in the base part 310, to match the center of the light receiving portion 22 with the center of the lens surface 415. The optical fiber is fit to the cylindrical portion 416 of the base part 410, and the light emitted from the end surface of the optical fiber is collected by the lens surface 415 of the base part 410 toward the light receiving portion 22 of the photodiode 20 connected to the conductive plate 30 buried in the base part 410.

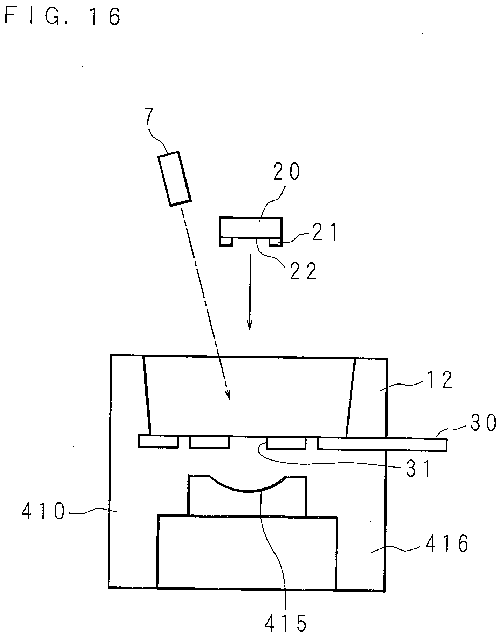

FIG. 16 is a schematic view for explaining a manufacturing method of the optical communication module according to the fourth configuration. In the method for manufacturing the OSA 1 according to the fourth configuration, the conductive plate 30 is formed in a predetermined phase, for example, from working a metal plate, the photodiode is connected to the conductive plate 30 with solder, the wire 35 and the like, the photodiode 20 and the conductive plate 30 are kept in a mold for the injection molding, and transparent synthetic resin is poured and cured, to form the base part 410 (these processes are not shown in figures). These processes make the lens surface 415 and cylindrical portion 416 integrally with the base part 410.

Then, the camera 7 is utilized to capture an image from above the base part 410, and the center position of the lens surface 415 is determined through the opening 31 of the conductive plate 30 and the transparent base part 410. The position of the photodiode 20 is determined with respect to the base part 410, to match the center position of the lens surface 415 determined from the captured image with the center of the light receiving portion 22 of the photodiode 20. The photodiode 20 is connected and fixed with solder or the like to the exposed portion of the conductive plate 30 buried in the base part 410, to arrange the photodiode 20 at the determined position. After the photodiode 20 is connected and fixed, the cover 14 is connected and fixed with adhesive or the like to the upper end surface of the base part 410. Thus, this method is completed.

The OSA 1 according to the fourth configuration described above can further reduce the number of parts required for the OSA 1 and further simplify the manufacturing method, because the base part 10, lens part 40 and cylindrical part 50 of the OSA 1 according to the embodiment 1 are integrally formed. Furthermore, the integral formation can contribute to accurately match the center of lens surface 415 of the basement 410 with the center of cylindrical portion 416. Moreover, these centers can be accurately matched with the center of the light receiving portion 22 of the photodiode 20. Therefore, it is possible to further improve the accuracy of the OSA 1 receiving optical signals.
It should be understood that the embodiment described herein is only illustrative of the present invention and that various modifications may be made thereto without departing from the scope of the invention as defined in the appended claims.

### EXPLANATION OF ITEM NUMBERS

- 1: OSA (optical communication module)
- 7: camera
- 10: base part (synthetic resin part)
- 12: peripheral wall
- 12a: recess portion
- 13: peripheral wall
- 14: cover
- 15: through hole
- 20: photodiode (photoelectric device)
- 21: connection terminal
- 22: light receiving portion
- 25: photodiode (photoelectric device)
- 30, 30a-30c: conductive plate
- 31: opening
- 35: wire
- 40: lens part
- 50: cylindrical part
- 240: lens part
- 241: plate portion
- 250: cylindrical portion
- 251: fitting hole
- 310: base part (synthetic resin part)
- 315: lens surface (lens part)
- 410: base part (synthetic resin part)
- 415: lens surface (lens part)
- 416: cylindrical portion

## Claims

1. A method for manufacturing an optical communication module (1) that comprises a photoelectric device (20, 25) having an optical portion (22) to receive or emit light in a surface connected to a conductor (30, 30a-30c) and performing a photoelectric conversion, a synthetic resin part provided with the conductor (30, 30a-30c) connected to the photoelectric device (20, 25), a lens part (40, 240, 315, 415) fixed to the synthetic resin part (10, 310, 410) and opposed to the optical portion (22), and a cylindrical part (50, 250, 416) fixed to the lens part (40, 240, 315, 415) and having an inserted optical communication line, wherein the synthetic resin part (10, 310, 410) is made of transparent synthetic resin,
the method comprising:
- a first step of fixing to integrally form the synthetic resin part (10, 310, 410), the lens part (40, 240, 315, 415), and the cylindrical part (50, 250, 416);
- a second step of utilizing a camera (7) to capture the lens part formed integrally during the first step through the synthetic resin part (10, 310, 410) which is transparent, after the first step; and
- a third step of determining a position for the photoelectric device (20, 25) and connecting the photoelectric device (20, 25) to the conductor (30, 30a-30c) arranged on the synthetic resin part (10, 310, 410), based on the captured image during the second step, after the second step.

2. A method for manufacturing an optical communication module (1) that comprises a photoelectric device (20, 25) having an optical portion (22) to receive or emit light in a surface connected to a conductor (30, 30a-30c) and performing a photoelectric conversion, a synthetic resin part provided with the conductor (30, 30a-30c) connected to the photoelectric device (20, 25), a lens part (40, 240, 315, 415) fixed to the synthetic resin part (10, 310, 410) and opposed to the optical portion (22), and a cylindrical part (50, 250, 416) fixed to the lens part (40, 240, 315, 415) and having an inserted optical communication line, wherein the synthetic resin part (10, 310, 410) is made of transparent synthetic resin,
the method comprising:
- a first step of integrally molding the synthetic resin part (10, 310, 410), the lens part (40, 240, 315, 415), and the cylindrical part (50, 250, 416);
- a second step of utilizing a camera (7) to capture the lens part formed integrally during the first step through the synthetic resin part (10, 310, 410) which is transparent, after the first step; and
a third step of determining a position for the photoelectric device (20, 25) and connecting the photoelectric device (20, 25) to the conductor (30, 30a-30c) arranged on the synthetic resin part (10, 310, 410), based on the captured image during the second step, after the second step.

## Patentansprüche

1. Verfahren zum Herstellen eines optischen Kommunikationsmoduls (1), das umfasst: eine fotoelektrische Vorrichtung (20, 25) mit einem optischen Abschnitt (22) zum Empfangen oder Aussenden von Licht in einer Oberfläche, der mit einem Leiter (30, 30a-30c) verbunden ist, und zum Durchführen einer fotoelektrischen Umwandlung, ein Synthetikharzteil, das den Leiter (30, 30a-30c) enthält, der mit der fotoelektrischen Vorrichtung (20, 25) verbunden ist, ein Linsenteil (40, 240, 315, 415), das an dem Synthetikharzteil (10, 310, 410) befestigt ist und dem optischen Abschnitt (22) gegenüberliegt, und ein zylindrisches Teil (50, 250, 416), das an dem Linsenteil (40, 240, 315, 415) befestigt ist und eine eingefügte optische Kommunikationsleitung umfasst, wobei das Synthetikharzteil (10, 310, 410) aus einem transparenten, synthetischen Herz hergestellt ist,
wobei das Verfahren umfasst:
- einen ersten Schritt zum Befestigen zum integral Formen des Synthetikharzteils (10, 310, 410), des Linsenteils (40, 240, 315, 415) und des zylindrischen Teils (50, 250, 416);
- einen zweiten Schritt zum Verwenden einer Kamera (7) zum Aufnehmen des während des ersten Schritts integral geformten Linsenteils durch das Synthetikharzteil (10, 310, 410), das transparent ist, nach dem ersten Schritt; und
- einen dritten Schritt zum Bestimmen einer Position für die fotoelektrische Vorrichtung (20, 25) und zum Verbinden der fotoelektrische Vorrichtung (20, 25) mit dem Leiter (30, 30a-30c), der auf dem Synthetikharzteil (10, 310, 410) angeordnet ist, auf der Grundlage des während des zweiten Schritts aufgenommenen Bildes, nach dem zweiten Schritt.

2. Verfahren zum Herstellen eines optischen Kommunikationsmoduls (1), das umfasst: eine fotoelektrische Vorrichtung (20, 25) mit einem optische Abschnitt (22) zum Empfangen oder Aussenden von Licht in einer Oberfläche, der mit einem Leiter (30, 30a-30c) verbunden ist, und zum Durchführen einer fotoelektrischen Umwandlung, ein Synthetikharzteil, das den Leiter (30, 30a-30c) enthält, der mit der fotoelektrischen Vorrichtung (20, 25) verbunden ist, ein Linsenteil (40, 240, 315, 415), das an dem Synthetikharzteil (10, 310, 410) befestigt ist und dem optischen Abschnitt (22) gegenüberliegt, und ein zylindrisches Teil (50, 250, 416), das an dem Linsenteil (40, 240, 315, 415) befestigt ist und eine eingefügte optische Kommunikationsleitung umfasst, , wobei das Synthetikharzteil (10, 310, 410) aus einem transparenten, synthetischen Herz hergestellt ist,
wobei das Verfahren umfasst:
- einen ersten Schritt zum integral Formen des Synthetikharzteils (10, 310, 410), des Linsenteils (40, 240, 315, 415) und des zylindrischen Teils (50, 250, 416);
- einen zweiten Schritt zum Verwenden einer Kamera (7) zum Aufnehmen des während des ersten Schritts integral geformten Linsenteils durch das Synthetikharzteil (10, 310, 410), das transparent ist, nach dem ersten Schritt; und
- einen dritten Schritt zum Bestimmen einer Position für die fotoelektrische Vorrichtung (20, 25) und zum Verbinden der fotoelektrische Vorrichtung (20, 25) mit dem Leiter (30, 30a-30c), der auf dem Synthetikharzteil (10, 310, 410) angeordnet ist, auf der Grundlage des während des zweiten Schritts aufgenommenen Bildes, nach dem zweiten Schritt.

## Revendications

1. Procédé de fabrication d'un module de télécommunication optique (1) qui comprend un dispositif photoélectrique (20, 25) ayant une partie optique (22) pour recevoir ou émettre un lumière dans une surface connectée à un conducteur (30, 30a-30c) et réalisant une conversion photoélectrique, une partie de résine synthétique fournie avec le conducteur (30, 30a-30c) connecté au dispositif photoélectrique (20, 25), une partie de lentille (40, 240, 315, 415) fixée à la partie de résine synthétique (10, 310, 410) et opposée à la partie optique (22) et une partie cylindrique (50, 250, 416) fixée à la partie de lentille (40, 240, 315, 415) et ayant une ligne de télécommunication optique insérée, dans lequel la partie de résine synthétique (10, 310, 410) est faite de résine synthétique transparente,
le procédé comprenant :
- une première étape de fixation pour former d'un seul tenant la partie de résine synthétique (10, 310, 410), la partie de lentille (40, 240, 315, 415), et la partie cylindrique (50, 250, 416) ;
- une deuxième étape d'utilisation d'un appareil photo (7) pour capturer la partie de lentille formée d'un seul tenant pendant la première étape à travers la partie de résine synthétique (10, 310, 410) qui est transparente, après la première étape ; et
- une troisième étape de détermination d'une position pour le dispositif photoélectrique (20, 25) et connexion du dispositif photoélectrique (20, 25) au conducteur (30, 30a-30c) agencé sur la partie de résine synthétique (10, 310, 410), sur la base de l'image capturée pendant la deuxième étape, après la deuxième étape.

2. Procédé de fabrication d'un module de télécommunication optique (1) qui comprend un dispositif photoélectrique (20, 25) ayant une partie optique (22) pour recevoir ou émettre une lumière dans une surface connectée à un conducteur (30, 30a-30c) et réalisant une conversion photoélectrique, une partie de résine synthétique fournie avec le conducteur (30, 30a-30c) connecté au dispositif photoélectrique (20, 25), une partie de lentille (40, 240, 315, 415) fixée à la partie de résine synthétique (10, 310, 410) et opposée à la partie optique (22) et une partie cylindrique (50, 250, 416) fixée à la partie de lentille (40, 240, 315, 415) et ayant une ligne de télécommunication optique insérée, dans lequel la partie de résine synthétique (10, 310, 410) est faite de résine synthétique transparente,
le procédé comprenant :
- une première étape de moulage d'un seul tenant de la partie de résine synthétique (10, 310, 410), la partie de lentille (40, 240, 315, 415) et la partie cylindrique (50, 250, 416) ;
- une deuxième étape d'utilisation d'un appareil photo (7) pour capturer la partie de lentille formée d'une seul tenant pendant la première étape à travers la partie de résine synthétique (10, 310, 410) qui est transparente, après la première étape ; et
- une troisième étape de détermination d'une position pour le dispositif photoélectrique (20, 25) et connexion du dispositif photoélectrique (20, 25) au conducteur (30, 30a-30c) agencé sur la partie de résine synthétique (10, 310, 410) sur la base de l'image capturée pendant la deuxième étape, après la deuxième étape.
